# EUROPEAN PATENT SPECIFICATION

(11) **EP 2 651 097 B1**
(45) Date of publication and mention of the grant of the patent: **09.01.2019**
(21) Application number: 13162687.1
(22) Date of filing: 08.04.2013
(51) Int. Cl.: H04L 29/06

(54) **Method of authenticating a user at a service on a service server, application and system**
Verfahren zur Authentifizierung eines Benutzers bei einem Dienst auf einem Dienstserver, Anwendung und System
Procédé d'authentification d'un utilisateur au niveau d'un service sur un serveur de service, application et système

(30) Priority: 11.04.2012 DE 102012103106
(43) Date of publication of application: 16.10.2013
(73) Proprietor: Vodafone GmbH, 40549 Düsseldorf (DE)
(72) Inventor: Nakonetzki, André, 40699 Erkrath (DE); Wilhelm, Joubert, 40545 Düsseldorf (DE); Sowen, Nils, 40878 Ratingen (DE)
(74) Representative: Cullinane, Marietta Bettina

(56) References cited:
- EP-A1- 1 107 089
- US-A1- 2006 002 556

## Description

The present invention relates to a method of authenticating a user as well as to a corresponding application and a corresponding system.

In communication networks, as for example the Internet, it is well known, that users have to register themselves with a service for using this service. For this purpose, for example, a user name and a password are entered. This data is entered by the user at his terminal and are transmitted to the service. Furthermore, it is known to generate a password for authentication of a mobile network unit of a user at a wireless local network (WLAN). This password is then provided to the user at the mobile device which is associated to him. The user can then enter this password at the mobile network unit, in order to authenticate himself at the WLAN-Network and to use the WLAN Network. Such a method is, for example, described in EP 1 351 536 A1.

US 2006 / 0002556 A1 discloses a method and system that authenticates and securely enrolls an untrusted device over a cellular network. In operation, the mobile device transmits an identifier via a communication transport over a first network. A server receives the transmission and sends a token to the mobile device across a trusted network. The token is transmitted by the mobile device over the first network to the server. The server verifies the token and may for example issue a digital certificate for device authentication.

On disadvantage of this approach is that the digital certificate for device authentication is only related to the mobile device, an authentication towards a service may therefore be necessary in addition to the digital certificate.

One disadvantage of the known methods is that they require a high degree of interaction on the part of the user. In addition, a previous registration of the user at the service is required, at least for the method with user name and password.

The problem underlying the present invention is thus to provide a solution, which allows for a simple yet secure usage of services, in particular on the Internet, also from a mobile communication terminal.

The invention is based on the finding, that this problem can be solved by automatically recognizing a participant and being able to subsequently fully automatically authenticate the participant for a service.

According to a first aspect, the problem according to the invention is thus solved by a method of authenticating a user of a communication terminal, on which at least one application is installed, at a service on a service server. The method is characterized in that an initiation request, which contains an address identifier of the communication terminal, is generated by the application for initiating a session and is transmitted to the service server,
after receipt of the initiation request the service server automatically generates and transmits a request specific key to the communication terminal and the application subsequently generates an access request in the session, wherein the application integrates the received request specific key automatically in the access request, and
the access request is automatically transmitted from the communication terminal to the service server in the session

Authenticating a user according the present invention is in particular understood as the authenticating of a user at a service on a service server, wherein the communication between the communication terminal, which the user uses for the communication with the service server, and the service server is authenticated by authentication of the user. Hence, authenticating a user according to the invention refers to authenticating or admitting the communication of the communication terminal, which is associated to the user, with the service server and in particular the communication of the application on the communication terminal with the service on the service server. The authentication is a confirmation of the entitlement or admittance for the communication and in particular for a session. The communication between the communication terminal and the service server and in particular between the application and the service is also referred to as data transfer or data exchange between these components or programs. This communication, which is authenticated, that means admitted, by the authentication of the user is hereinafter also referred to as session. In a session herein several accesses may be performed to a service at the service server. Access denotes a data transmission originating from the communication terminal, which can comprise data exchange, that means a transmission of data from the service server to the communication terminal. The session is preferably limited with respect to time. The time limitation can be bound to a mere time indication, that means the session may, for example, be terminated after a specific time period. According to the invention it is, however, preferred, that the session is terminated by one of the two components or programs, that means the communication terminal, the service server, the application or the service. The session is carried out via a communication connection between the communication terminal and the service server. This communication is preferably at least partially performed over a packet switched network, in particular the Internet. The session is carried out in line with the protocol, which is preset for the respective network. For the Internet it may be, for example, the http-protocol. The session or communication according to the invention can be carried out via an access network and a core network. Herein, the service server is arranged in the core network. The core network may, for example, be the Internet and the access network may be a local or mobile network, for example a LAN, WLAN, GSM, UMTS or the like.

As far as reference is made to the service server, the steps which are carried out by the service server - if not indicated differently - are preferably carried out by the service, which runs on the service server and to which the application is connected.

A communication terminal according to the invention is preferably understood as a communication terminal, which can be used as a terminal or end device of a mobile network. The mobile network is also referred to as mobile communication network. Preferably, the communication terminal is thus a mobile phone. A communication terminal may be, however, also a different communication device, such as a PDA, Laptop or notebook, wherein this communication device is then specifically equipped for the communication via a mobile network. For example, the communication device has a corresponding or respective adapter or a corresponding or respective modem. In addition, the communication terminal, which may also be referred to as a mobile communication terminal, is preferably designed for the communication with units of the Internet. In particular, a communication according to the http-protocol can be performed with the communication terminal according to the invention. It is specifically preferred that also the communication according to the https-protocol is possible. In a specifically preferred embodiment, the communication terminal is thus a smartphone. Being designed for a purpose according to the invention can also be referred to as being adapted for that purpose.

An application, which is installed on the communication terminal, denotes a program which is hereinafter also referred to as App, application or client. This application according to the invention is in particular designed for the access to and the usage of a service on the service server. In that respect, the application is a client to the service on the service server. The service, at least partially, runs on the service server.

According to the invention an initiation request for initiating a session is generated by the application and is transmitted to the service server, in particular to the service. Session denotes - as already indicated above - a communication, which relates to a service, which is installed on the service server or runs thereon, respectively. One or several accesses to the service may occur in the session. In addition, the session runs via the communication connection, which exists between the communication terminal and the service server. Via this existing communication connection, the initiation request is transmitted to the service server. The initiation request is received at the service server and there effects the opening of a session. In the initiation request an address identifier of the communication terminal is contained. Thereby, the communication and thus the session are fixed to the communication terminal. The address identifier thus identifies at least the communication terminal.

After receipt of the initiation request, the service server automatically generates a request specific key. A request specific key denotes a key, which relates to the initiation request, that means which is associated to the session, which is to be initiated by the initiation request. The association of the key to the session is preferably stored at the service server. A key according to the invention denotes an indication which serves for the authentication of a user. Preferably, the key is used together with further information during the authentication. The key is hereinafter also referred to as password and is, for example, a code word or a key word, which consist of data, that means digits, letters and/or other characters. Since the request specific key is generated at the service server upon receipt of each initiation request, it may also be referred to as one-time-password, as it is only valid for the session to which the request relates. An automatic generation of the request specific key according to the invention is understood as an establishing, which is performed without further entries, in particular without further user input at the service server.

The request specific key is transmitted from the service server to the communication terminal. Thereby, the request specific key is available for further actions at the communication terminal, from which the initiation request had been generated and transmitted. The transmission of the request specific key to the communication terminal and the receipt of the request specific key are performed automatically. This means that no interaction by the user is necessary.

The application subsequently generates an access request in the session at the communication terminal. The generation in the session in this context means, that the access request is generated during the session, which has been started by the initiation request. The access request may be generated by the application itself or may be triggered by an action of the user. This action of the user may, for example, be the repeated or renewed selection of the service, for example, by a link on the communication terminal. The application automatically integrates the received request specific key into the access request. For automatic integration, the application may read the request specific key, for example, from a message, which has been received at the communication terminal. Alternatively, the request specific key may be, however, also transmitted automatically to the application by the unit in the communication terminal, which receives the request specific key. As the application, which receives the request specific key is also the application from which the initiation request for initiation of the session has been generated and transmitted, this application can associate the request specific key, which relates to this request, to the session and integrate the request specific key in the corresponding access request. In addition, the access request is automatically transmitted from the communication terminal to the service server in the session.

With the method according to the invention it is possible to authenticate the user at a service server, without an interaction of the user being absolutely mandatory. In particular, entering a key at the communication terminal by the user is not required. As the key according to the invention is specific to the initiation request, by which a session is established, the key, which is later received at the service server, can unambiguously be associated or assigned to the session.

The request specific key is transmitted to the communication terminal, from which the initiation request had been sent, on the basis of the transmitted address identifier of the communication terminal. Thereby, the security of the authentication is increased, as the access of third parties can be prevented to the largest extend. Also the communication in the communication terminal for transmission of the request specific key from a receiving unit to the application is more secure in comparison to external transmissions from a third device to the communication terminal, as the access of third parties to such an internal transmission is excluded. As, in addition, the request specific key is included into the access request automatically, the security is further increased and the user interaction is also minimized.

According to the invention, an address identifier of the communication terminal is integrated into the initiation request at the communication terminal. With this address identifier on the one hand an additional communication connection from the service server with the communication terminal can be established. The address identifier is preferably an identifier of the communication terminal in a communication network, in particular in a mobile network. Thereby, a communication connection can be established from the service server to the communication terminal by means of the address identifier via the mobile network. Preferably, the address identifier of the communication terminal also serves for identifying the user at the service at the service server. For this purpose, preferably an address identifier, which in addition to the address of the communication terminal, in particular in a mobile network, also establishes a reference to the user, is used as address identifier. In a mobile network, this address identifier is in particular the Mobile Subscriber Integrated Services Digital Network Number (MSISDN). With this number on the one hand the communication terminal is identifiable and addressable in the communication network, in particular in the mobile network. On the other hand it becomes possible to identify the user of the communication terminal with the address identifier of the communication terminal. This is in particular true, as in a mobile network for each MSISDN Number in general also the corresponding user is stored. Since this address identifier is contained in the initiation request to the service server, this information is available at the service server for further usage. Since the address identifier, in addition, is integrated in the initiation request and a request specific key is generated for this initiation request, also a relation between the request specific key and the communication terminal and preferably also the user exists.

Preferably, the application performs a query of an address identifier of the communication terminal prior to generating the initiation request. Thereby it can be ensure, even with a terminal, on which this address identifier might not be present, that this information is available prior to establishing or generating the initiation request. The address identifier, which is queried in this query, is preferably the current, that means the present, address identifier of the communication terminal. If, for example, the MSISDN is used as address identifier, it may change with different users of the communication terminal. Therefore, a query prior to establishing the initiation request is helpful, in order to ensure a reliable authentication.

The query of the address identifier is preferably performed internally in the communication terminal. In an internal query, the application will, for example, access storage units, which are exclusively used and written to by the application. Hence, in such a query entries of an address identifier, which originate from previous sessions of the application, would be read out and could be used. In addition or alternatively, it is, however, also possible, that the application in this query accesses other storage units in the communication terminal, for example a SIM-card. Only if this query delivers a negative query result, the query is subsequently performed externally to the communication terminal. An external query denotes a query, via which the information is queried from a unit, which is separate to the communication terminal and which is preferably a network side unit, in particular a network server or a network register. The network server may, for example, be assigned or associated to the network operator or network provider and may comprise the Home Location Register. Since the query for the address identifier is performed internally first and only in case of a negative query result is performed externally, the authentication process if further simplified. In particular, with an initiation request which is started from a communication terminal, from which previously already an initiation request had been started, a repeated or renewed external query of the address identifier can be omitted and the method can thus be simplified altogether.

It is particularly preferable, that the external query of the address identifier comprises the usage of a short dial. Herein a query short message, for example an empty short message (SMS), can be sent from the communication terminal to a server of the network provider. The address identifier, in particular the MSISDN of the sender, that means of the communication terminal, will be copied and will be inserted as message text into the response to this query message at the short dial application. This response message is received at the communication terminal. From this response message the address identifier can be read out at the communication terminal and preferably immediately at the application, and can be used for generating the initiation request. Furthermore, the received address identifier can also be stored for further or later usages.

Preferably, in addition to the request specific key at least one request specific identifier of the session is generated at the service server. Since the session is only started by the initiation request, also the request specific identifier is only generated after the receipt of the initiation request at the service server. The request specific identifier is also referred to as session token and serves for identifying the session. With the request specific identifier in particular a communication between the communication terminal and the service and in particular between the application and the service can be identified as belonging to a session and can be processed accordingly. If the communication between the communication terminal and the service server is performed via the Internet, the session may also be referred to as an http-session. For this session a unique request specific identifier, which can also be referred to as a session ID, is associated to the application, that means the client. The application sends this request specific identifier at each subsequent access to the service. The session is preferably generated with the first access by the application and remains valid for the entire communication duration. That means, that the access, the authentication, the data exchange as well as the termination of the session are contained in the session.

Preferably, the request specific identifier of the session is a temporary identifier. In particular, the request specific identifier is limited to the duration of the session, that means is valid only for the duration of the session.

In the method according to the invention, preferably the request specific identifier is transmitted from the service server to the communication terminal via the communication connection, via which the initiation request had been transmitted to the service server. This communication connection is preferably a communication connection, which at least partially is carried out according to the protocol of the Internet, preferably the http-protocol or https-protocol. Since this connection has already been established prior to the transmission of the initiation request, the establishment of a further communication connection is not necessary. In addition, the identifier may thereby be transmitted in the session, which has been opened by the initiation request and can thus easily be associated to the session at the service server and at the communication terminal.

The request specific identifier is integrated by the application into the access request at the communication terminal. Thereby, both the request specific key as well as the request specific identifier can be integrated into the access request and thus all information which is necessary for the authentication can automatically be provided by the communication terminal at the service server. Furthermore, in an access to the service, which occurs after the authentication of the user, the integration of the request specific key may be omitted and only the request specific identifier may be transmitted to the service, since at that point in time only the association to a session is necessary.

The request specific key and the request specific identifier are preferably transmitted from the service server to the communication terminal via different communication connections, which can also be referred to as communication channels. Thereby, the security of the authentication can be further increased. This is in particular true, since two connections have to be established for the communication. One connection is preferably the connection, via which the communication terminal has transmitted the initiation request to the service server and the other communication connection is generated using the address identifier, which the service server has received from the communication terminal.

According to a preferred embodiment, the request specific key is transmitted in a short message, in particular via a mobile network. It is particularly preferred that the request specific key is transmitted to the communication terminal in an SMS. In that case it is particularly preferred, that the application on the communication terminal can read the request specific key from the SMS. Alternatively, it is also possible, that the request specific key is read out from the SMS by a different unit and is subsequently provided to the application. One advantage of transmitting the request specific key via SMS is that the communication via SMS is already secured due to the applicable protocols and infrastructure, for example of the GSM network. With the transmission of the request specific key in an SMS it can be received at the SIM-card of the communication terminal, which may be a mobile phone, or it can reach the storage of the mobile phone. The application can access the SIM-card or the storage. This can, for example, be capsulated by the respective smartphone SDK-API, for example Android SDK.

The request specific identifier is at least partially transmitted via a packet switching network, in particular via the Internet. Herein, the request specific identifier may, for example, be transmitted in a cookie. Thereby, the request specific identifier is available at the time of a later access by the user to the service and can be delivered with the access to the service server.

The application preferably reads the request specific key out of at least one message in the communication terminal, for obtaining the request specific key. The message preferably is a short message, in particular an SMS message. Since the reading out is performed by the application, an interaction from the user is not required.

It is, however, also provided, that the user of the communication terminal has access to the SMS storage of the device and in case of a proprietary smartphone system, for example Apple iPhone, this SMS message is read by the user and the user can enter the request specific key by manual input into a text field, which is provided by the application. Thereby the reading out by the application would be replaced by a manual step.

The service on the service server is preferably a value added service, which may also be referred to as premium service. Such service is thus not the mere establishment of the communication connection. Any service, such as for example social network services on the internet and the like may be used.

According to one embodiment, a communication connection is established between the communication terminal and the service server before or during the transmission of the initiation request from the communication terminal to the service server and the initiation request is transmitted via this communication connection. This means, that the authentication according the present invention is not an authentication of the communication connection as such but relates to a communication or session, which is performed in an existing communication connection.

Preferably, in addition to the steps which have already been mentioned the method comprises the step of verifying the request specific key and the request specific identifier and the link of the key and the identifier on the service server and in case of positive verification result, authenticating, that means confirming the entitlement or admission of the user for the communication between the application and the service or the authentication of the session.

According to one embodiment, the method comprises the following steps:
The step of determining the identity of the user,
The step of session initiation,
The step of authentication, and
The step of verifying the request specific key and the request specific identifier and the link of the key and the identifier on the service server and confirmation of the authentication of the user in case of a positive verification result.

The determining of the identity of the user can in particular be performed by determining the address identifier (MSISDN) of the communication terminal in a mobile network. This address identifier can de determined, as already described above, by means of an internal or an external query and may, if necessary, be stored or buffered in the communication terminal.

In this embodiment, the session initiation is preferably carried out by sending an initiation request according to the Internet protocol, in particular as an https-request, which contains the identity of the user, in particular by means of the MSISDN, to the service server. Furthermore, the session initiation comprises the generating of a request specific key, in particular a one-time-password (OTP), at the service server. This request specific key is sent via the mobile network to the communication terminal, which is assigned to the address identifier. Finally, the step of the session initiation in this embodiment comprises the generation of a temporary request specific identifier, in particular a session token, and transmitting the session token by means of a cookie to the application on the communication terminal.

In this embodiment, the step of authenticating, in particular, comprises the generating of an access request, in which the request specific key, in particular the OTP, and the request specific identifier, in particular the session token, are contained, and the transmission of the access request to the service on the service server.

Finally, the method according to this embodiment comprises the step of verifying the request specific key, in particular the OTP, and the request specific identifier, in particular the session token, and the link of the key and the identifier on the service server and in case of a positive verification result, confirmation of the authentication of the user.

With the present invention and in particular with this embodiment of the method, a fully automated authentication of a session after automated identification of the user can be performed. The application, which is used therein, preferably is a smartphone app and the session is an http-session. In the method according to the invention, the user does not have to enter a code or password; the authentication is instead carried out automatically.

According to a further aspect, the invention relates to an application for a communication terminal for the access to at least one service on a service server. The application is characterized in that the user can be authenticated at the service by the application, that the application is designed for at least generating and transmitting an initiation request for initiation a session, for automatically obtaining a request specific key and for generating an access request, within which the application integrates the request specific key

The application according to the invention can be implemented by hardware and/or software.

The application may also be referred to as a computer program product, which can be stored on and run on the communication terminal, for example a mobile phone, in particular a smart phone. The communication terminal with respect to the application functions as a processing unit and in this context can also be referred to as a computer. The invention thus also relates to a computer program product, with program medium which can be read on a computer, in particular the communication terminal, which, if the program is loaded, has program means for performing the method according to the invention. Also a program, which comprises commands, which are adapted to perform the method according to the invention, is subject of the present invention. Also a computer readable medium, on which a program is stored, wherein the program triggers the computer, that means the communication terminal, to perform the method according to the invention is also subject of the present invention.

With the application of the invention, or the computer program product, respectively, it is advantageous, that due to the improved method, the authentication of a user can be carried out in a simple way. In particular, the interaction of the user can be reduced to a minimum. An entry of the request specific key at the communication terminal is not required with the application according to the invention.

It is particularly preferred that the application is designed such that it is designed for querying the address identifier of the communication terminal, as already explained above. Thereby also the recognition of the user, that means the identification of the user can be performed automatically.

According to a preferred embodiment, the application is designed for carrying out the invention according to the invention.

According to a further aspect, the invention relates to a system for authenticating a user of a communication terminal, wherein the system has at least one communication terminal and at least one service server with a service which is at least partially run on the service server. The system is characterized in that at least one application for communication with the service on the service server is present on the communication terminal, that the application is designed for automatically establishing an initiation request, for initiating a session, which comprises an address identifier of the communication terminal, that the service server is designed for generating at least one request specific key on the basis of the initiation request and for transmitting the at least on request specific key via different communication connections to the communication terminal, that the communication terminal is designed for automatically generating and transmitting an access request, in the session, within which the received request specific key is contained, to the service server and that the service server is designed for comparing the request specific key, which is contained in the access request with the generated request specific key and to authenticate the user in case of a positive comparison result. This authentication of the user is thus a confirmation of the authorization of the user for communication of the communication terminal, which is used by the user, with the service server and in particular of the session between the service and the application.

Preferably, the system comprises at least one short dial application for communication of at least the address identifier of the communication terminal to the communication terminal. Herein, the short dial application is in particular designed for receiving and processing of short messages, in particular empty SMS messages. The short dial application can, for example, be stored on a server of the provider of the mobile network within which the communication terminal serves as an end device or in a unit, which the short dial application can access. The short dial application, according to the invention serves for copying the address identifier of the sender of the short message and for inserting the address identifier this into a response message to the sender. Thereby, the communication terminal can automatically query its address identifier.

The system according to the invention is preferably designed for performing the method according to the invention and preferably comprises at least one application according to the invention which is installed on at least one communication terminal.

Advantages and features, which have been described with respect to the method, correspondingly apply - as far as applicable - to the application according to the invention and the system according to the invention and vice versa and are thus only described once.

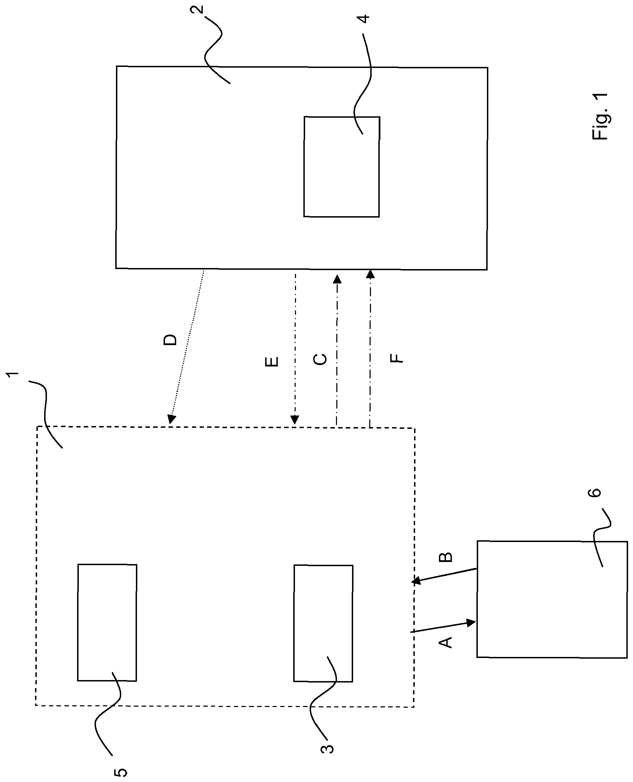

The invention will now be described again with reference to the enclosed figure 1, which shows an embodiment of the system according to the invention.

In figure 1 a communication terminal 1 is embodied as a mobile phone. In particular, the communication terminal is a smartphone. Furthermore, a service server 2 is shown, with which the communication terminal 1 can communicate. On the service server 2 at least one service 4 is provided, that means is at least partially performed by the service server 2. Furthermore, a short dial application 6 is shown. The communication terminal 1 can communicate with this short dial application 6. In the communication terminal 1, an identification module 5, preferably as a Subscriber Identity Module (SIM), is contained and preferably inserted into the communication terminal 1. Furthermore, an application 3 is shown in the communication terminal 1, which is installed thereon and which can be run by the communication terminal 1. The application 3 is designed such, that it can communicate with the service 4. The service 4 may be, for example, a web application, WAP application or a different online application. If the application 3 is opened at the communication terminal 1, a connection to the service server 2 is established automatically from the communication terminal 1. Herein, for example, a browser is opened, which allows for access to the Internet, and a specific address, for example a URL, which is stored in the application 3, is dialled or contacted. Thereby, a communication connection is established between the communication terminal 1 and the service server 2, which may for example be a WiFi or WLAN connection, respectively.

As indicated in figure 1, a query or validation may be carried out within the communication terminal 1 the first time that the application 3 is opened. In this query an address identifier of the communication terminal is searched for. This address identifier is an address identifier from the mobile network. In particular, the address identifier of the communication terminal 1 is an identifier of the communication terminal 1 in GSM, UMTS, HSDPA, LTE or further mobile network technologies. Hereinafter, the address identifier is also referred to as MSISDN, which uniquely identifies the communication terminal 1 and thus also the user of the communication terminal 1 in the mobile network. If the address identifier or MSISDN is not stored in the communication terminal 1, a query to a short dial application 6 is transmitted, as indicated by arrow A in figure 1. As a response to this query, the address identifier is automatically transmitted to the communication terminal 1 and thus to the application 3 (arrow B). The address identifier can be stored in the communication terminal 1, for example in the identification module 5. Subsequently, that means with the address identifier being present, the application 3 establishes an initiation request for initiating a session with the service 4. This initiation request may be contained in an https-request and the application 3 transmits with the request also the address identifier of the communication terminal 1 (arrow C). Subsequently, a request specific key, in particular a one-time-password (OTP) is transmitted to the communication terminal 1 from the service 4. This is indicated in figure 1 by arrow D. This transmission does not occur within the communication connection, which had been established between the communication terminal 1 and the service server 2, in which the communication is performed according to the http-protocol, but via a different communication channel. In particular, a communication connection in a mobile network, for example a GSM network, is used for transmission of short messages. It is particularly preferred that the transmission is thus performed in an SMS message, which hereinafter will also be referred to as SMS. The SMS is sent from the service server 2 or the service 4, respectively, to the MSISDN which was contained in the initiation request. After receipt of this message, which contains the request specific key, in particular the OTP, at the communication terminal 1, this key is automatically read out at the communication terminal 1 and is provided to the application 3. The application 3 in addition receives the request specific identifier or session identifier, which can also be referred to as session token, as is indicated by the arrow E, from the service 4.

In step F an access request which contains both the request specific identifier as well as the request specific key is then transmitted to the service 4. The thus received data can then be compared by the service 4 with data which is stored on the service server 2, in particular in the service 4, that means with a request specific key or a request specific identifier, and the service can then decide on the authentication of the user at the service. Therein the request specific key and the request specific identifier, which have been generated with respect to a single initiation request, are compared with the received data. If the indications transmitted in the access request F, namely the request specific key (OTP) and the request specific identifier (session token) match with the ones which had been generated at the service server 2 for the address identifier of the communication terminal 1, which was contained in the initiation request, the user and thus the session is authenticated with the service. In a further access within the session, this authentication is recognized and no further key is requested. For further accesses within the session, the transmission of the request specific identifier, that means the session token to the service server 2 is thus sufficient, as the service server 2 can determine by means of the session token whether the session has been authenticated or not. If the user is not authenticated, that means if his entitlement for the communication or session is not confirmed, a respective message can be transmitted to the communication terminal 1, which informs the user, that he could not be authenticated for this service. Further access to the service 4 is then no longer possible.

The present invention will now be described again with respect to a use case.

If a smartphone app access an internet service via the Internet, this communication, that means the user, is not authenticated at first. According to the state of the art, the user would then authenticate himself at a value added service by means of user identification (identity) and a password (secret) which has been set by the user. With the present invention the storing of such a secret can be omitted. Instead, the method according to the invention according to one embodiment comprises the following steps:

### 1) Determining the identity

Upon starting the smartphone app, it is checked whether the identity of the user has already been determined. The identity is for example the MSISDN (Mobile Subscriber ISDN Nummer) of the SIM-card which used in the smartphone, that means it identifies the user. If this identity has not yet been determined, the app initiates an empty SMS transmission in the background to a short dial in the network of the mobile network provider. An application, which merely copies the MSISDN of the sender and which includes the MSISDN as message text into a response SMS to the same number, serves as the recipient. The app can evaluate the response SMS and receives its own MSISDN, which it can use as identity and which it can store locally.

### 2) Session Initiation

As soon as the app now accesses the value added service, which is also referred to as service, via the Internet, a so called https-request is triggered. In this request also the MSISDN is transported as an identification feature. The service, which is run on the server, identifies, that the connection has not yet been authenticated and now sends an SMS with a randomly generated secret key (one-time-password OTP) to the transmitted MSISDN. At the same time a temporary identifier is generated, which can also be referred to as session token, and is announced by means of an http-cookie to the client, which is the app which is installed on the smartphone. The cookie process requires that the session token is transmitted with each further access from the app.

### 3) Authentication

The smart phone app receives the SMS with the OTP from the value added service and stores it temporarily. Then, a further http access is addressed to the value added service and the following information is transmitted therewith:
- One-time-password (received per SMS)
- Session token (received from the server via the Internet)

The value added service knows the connection of the two features already, as it has generated them itself. Only the recipient of the SMS, namely the user of the SIM card, can be in possession of both features. Consequently, the smartphone app has thus successfully authenticated itself at the value added service.

### 4) Further Accesses

In every subsequent access only the session token which has been authenticated by the value added service is transmitted.

### 5) Session Termination

After, for example, 20 minutes the session token automatically looses its validity with the value added service. A repeated or renewed session initiation according to step 2) is thus necessary.

With the present invention a simplified method of authentication of a user, in particular by authenticating a mobile terminal of the user via the Internet using an SMS-channel is provided.

With the present invention in particular the problem of the state of the art can be solved, that authentication features of an access from a mobile device via the Internet to a value added service is to be provided in a secure manner. Thereby, the situation, which was present so far, that mobile network subscriber, who access value added services via the Internet, for example a web application, cannot be reliably identified, is prevented.

Preferably, the authentication according to the present invention is lead through an SMS-channel, which due to the security means of the network which is used for this channel, for example the GSM network, is secure. By using an SMS-channel a non-authenticated access via the Internet by means of a secret key for a SIM-card which was transmitted via the SMS-channel, can be identified as an identity feature and can be authenticated.

In particular, the method according to the invention, for example, works on smartphones and in particular without interaction of the user. In addition, not only one single transaction can be authenticated, but the entire communication traffic, preferably within one session, with a value added service via the Internet can be authenticated.

The present invention has a number of advantages. In particular the present invention offers the possibility, to authenticate users, who are also referred to as subscriber or participants, of a mobile network for using any smartphone app and preferably to beforehand identify the user. Therein it is irrelevant, whether the user uses, for example, a WLAN connection for the access to the Internet or gets on the Internet, for example, via UMTS. In addition, according to the present invention an http-session is unlocked, that means authenticated, for a specific user, who is identified by the address identifier.

When using a WLAN or WiFi connection of the communication terminal with the service server, the method according to the invention can also be referred to as WiFi Auto Authentication per MSISDN. Herein, an automated identification and authentication of a user via MSISDN, that means by using the MSISDN in case of WiFi usage, is preferably performed. With the method according to the invention a secure usage of customer related data / transactions can be carried out without extensive additional registration.

The method according to the invention is, for example, usable for apps, integrated and extendable software and operating systems (cell phone, netbook, notebook, tablet, further devices with the option of identification via mobile communication (GSM, UMTS, HSDPA, LTE, further future mobile communication technologies), Web/Wap Logins, all further online registrations / authentifications, which can be authenticated by MSISDN, any further form, in which an identification of the customer is not possible due to the WiFi usage, which, however, becomes possible due to parallel mobile communication technology.

In addition, the invention may, for example, also be used by third party providers, that means by providers, who are not mobile network operators. Also users may conveniently verify themselves with the third party providers via their MSISDN, without having to log in with user name and password. For example, the authentication or registration according to the present invention can be carried out with services, such as, for example, facebook, ebay, Amazon, E-mail provider, online banking or further providers.

Thereby, the invention can be used for any online usage, which requires a password/login.

In case of usage of a mobile data connection, via the mobile network, the MSISDN can be also used for authentication without any additional verification process. Also there the user has an excellent user experience, which does not require further login, as the customer can identify himself via his MSISDN securely as himself.

### Refernce numbers

- 1: Communication terminal
- 2: Service server
- 3: Application
- 4: Value added service
- 5: Identification module (SIM)
- 6: Short dial application

## Claims

1. Method of authenticating a user of a communication terminal (1), on which at least one application (3) is installed, at a service (4) on a service server (2), **characterized in that** an initiation request, which contains an address identifier of the communication terminal (1), is generated by the application (3) for initiating a session and is transmitted to the service server (2),
the service server (2) after receipt of the initiation request automatically generates and transmits a request specific key to the communication terminal (1) and
the application (3) subsequently generates an access request in the session, wherein the application (3) integrates the received request specific key automatically in the access request, and the access request is automatically transmitted from the communication terminal (1) to the service server (2) in the session.

2. Method according to claim 1, **characterized in that** the application (3) performs a query of an address identifier of the communication terminal (1) prior to generating the initiation request.

3. Method according to claim 2, **characterized in that** the query of the address identifier is performed internally within the communication terminal (1) and only in case of a negative query result is performed externally to the communication terminal (1).

4. Method according to claim 3, **characterized in that** the external query comprises the usage of a short dial.

5. Method according to anyone of claims 1 to 4, **characterized in that** in addition to the request specific key at least one request specific identifier of the session is generated at the service server (2).

6. Method according to claim 5, **characterized in that** the request specific identifier of the session is a temporary identifier.

7. Method according to anyone of claims 5 or 6, **characterized in that** the request specific identifier is transmitted from the service server (2) to the communication terminal (1) via the communication connection, via which the initiation request had been transmitted to the service server (2).

8. Method according to anyone of claims 5 to 7, **characterized in that** the request specific identifier is integrated into the access request by the application (3).

9. Method according to anyone of claims 5 to 8, **characterized in that** the request specific key and the request specific identifier are transmitted from the service server (2) via different communication connections to the communication terminal (1).

10. Method according to claim 9, **characterized in that** the request specific key is transmitted in a short message, in particular via a mobile network.

11. Method according to anyone of claims 9 or 10, **characterized in that** the request specific identifier is at least partially transmitted via a packet switched network, in particular the Internet, preferably within a cookie.

12. Method according to anyone of claims 1 to 11, **characterized in that** the application (3) reads the request specific key from at least one message in the communication terminal (1) for obtaining of the request specific identifier.

13. Method according to anyone of claims 1 to 12, **characterized in that** the service (4) is a value added service.

14. Method according to anyone of claims 1 to 13, **characterized in that** before or during the transmission of the initiation request from the communication terminal (1) to the service server (2) a communication connection is established between the communication terminal (1) and the service server (2) and the initiation request is transmitted via this communication connection.

15. Method according to anyone of claims 1 to 14, **characterized in that** it comprises:
the step of determining the identity of the user, in particular by determining the address identifier, MSISDN, of the communication terminal (1) in a mobile network,
the step of session initiation, in particular by sending an initiation request according to the Internet protocol, in particular an HTTPS request, within which the identity of the user, in particular by means of the MSISDN, is contained, to the service server (2), generating a request specific key, in particular an OTP, at the service server (2), sending of the request specific key to the communication terminal (1) which is associated to the address identifier via the mobile network, generating a temporary request specific identifier, in particular a session token, transmitting the session token by means of a cookie to the application (3) on the communication terminal (1),
the step of authenticating, in particular by generating an access request, within which the request specific key, in particular the OTP, and the request specific identifier, in particular the session token, are contained, and transmission of the access request to the service (4) on the service server (2), and
the step of verifying the request specific key, in particular the OTP, and the request specific identifier, in particular the session token, and the link of the key and the identifier on the service server (2) and confirmation of the authorization of the user in case of a positive verification result.

16. Computer program product for a communication terminal (1) for access to at least one service (4) on a service server (2), **characterized in that** the computer program product comprises instructions which, when the program is executed by a computer, cause the computer to carry out the method according to anyone of claims 1 to 15.

17. System for authenticating a user of a communication terminal, wherein the system has at least one communication terminal (1) and at least one service server (2) with a service (4) which is at least partially run on the service server (2), **characterized in that** at least one application (3) for communication with the service (4) on the service server (2) is present on the communication terminal (1), that the application (3) is designed for automatically establishing an initiation request, for initiating a session, which comprises an address identifier of the communication terminal (1), that the service server (3) is designed for generating at least one request specific key on the basis of the initiation request and for transmitting the at least one request specific key via different communication connections to the communication terminal (1), that the communication terminal (1) is designed for automatically generating and transmitting to the service server (2), in the session, an access request, within which the received request specific key is contained, and that the service server (2) is designed for comparing the request specific key, which is contained in the access request with the generated request specific key and to authenticate the user in case of a positive comparison result.

18. System according to claim 17, **characterized in that** it comprises at least one short dial application (6) for communication of at least the address identifier of the communication terminal (1) to the communication terminal (1).

19. System according to claim 17 or 18, **characterized in that** the system is designed for performing the method according to anyone of claims 1 to 15 and at which preferably an application (3) according to anyone of claims 16 or 17 is installed on at least one communication terminal (1).

## Patentansprüche

1. Verfahren zum Authentifizieren eines Benutzers eines Kommunikationsendgerätes (1), auf dem zumindest eine Anwendung (3) installiert ist, an einem Dienst (4) auf einem Diensteserver (2), **dadurch gekennzeichnet, dass** eine Initiierungsanfrage, die einen Adress-Identifikator des Kommunikationsendgerätes (1) enthält, durch die Anwendung (3) zum Initiieren einer Sitzung erzeugt wird und an den Diensteserver (2) übermittelt wird, der Diensteserver (2) nach Empfang der Initiierungsanfrage automatisch einen anfragespezifischen Schlüssel erzeugt und an das Kommunikationsendgerät (1) übermittelt und
die Anwendung (3) anschließend eine Zugriffsanfrage in der Sitzung erzeugt, wobei die Anwendung (3) den empfangenen anfragespezifischen Schlüssel automatisch in die Zugriffsanfrage integriert, und
die Zugriffsanfrage in der Sitzung automatisch von dem Kommunikationsendgerät (1) zu dem Diensteserver (2) übermittelt wird.

2. Verfahren nach Anspruch 1, **dadurch gekennzeichnet, dass** die Anwendung (3) eine Abfrage eines Adress- Identifikators des Kommunikationsendgerätes (1) vordem Erzeugen der Initiierungsanfrage ausführt.

3. Verfahren nach Anspruch 2, **dadurch gekennzeichnet, dass** die Abfrage des Adress-Identifikators intern in dem Kommunikationsendgerät (1) ausgeführt wird und nur im Fall eines negativen Abfrageergebnisses extern zu dem Kommunikationsendgerät (1) ausgeführt wird.

4. Verfahren nach Anspruch 3, **dadurch gekennzeichnet, dass** die externe Abfrage die Verwendung einer Kurzwahl umfasst.

5. Verfahren nach einem der Ansprüche 1 bis 4, **dadurch gekennzeichnet, dass** zusätzlich zu dem anfragespezifischen Schlüssel zumindest eine anfragespezifische Kennung der Sitzung an dem Diensteserver (2) erzeugt wird.

6. Verfahren nach Anspruch 5, **dadurch gekennzeichnet, dass** die anfragespezifische Kennung der Sitzung eine temporäre Kennung ist.

7. Verfahren nach einem der Ansprüche 5 oder 6, **dadurch gekennzeichnet, dass** die anfragespezifische Kennung von dem Diensteserver (2) an das Kommunikationsendgerät (1) über die Kommunikationsverbindung, über die die Initiierungsanfrage an den Diensteserver (2) übermittelt wurde, übermittelt wird.

8. Verfahren nach einem der Ansprüche 5 bis 7, **dadurch gekennzeichnet, dass** die anfragespezifische Kennung durch die Anwendung (3) in die Zugriffsanfrage integriert wird.

9. Verfahren nach einem der Ansprüche 5 bis 8, **dadurch gekennzeichnet, dass** der anfragespezifische Schlüssel und die anfragespezifische Kennung von dem Diensteserver (2) über unterschiedliche Kommunikationsverbindungen an das Kommunikationsendgerät (1) übermittelt werden.

10. Verfahren nach Anspruch 9, **dadurch gekennzeichnet, dass** der anfragespezifische Schlüssel in einer Kurznachricht, insbesondere über ein mobiles Netzwerk, übermittelt wird.

11. Verfahren nach einem der Ansprüche 9 oder 10, **dadurch gekennzeichnet, dass** die anfragespezifische Kennung zumindest teilweise über ein paketvermittelndes Netzwerk, insbesondere das Internet, vorzugsweise in einem Cookie übertragen wird.

12. Verfahren nach einem der Ansprüche 1 bis 11, **dadurch gekennzeichnet, dass** die Anwendung (3) den anfragespezifischen Schlüssel aus zumindest einer Nachricht in dem Kommunikationsendgerät (1) ausliest, um die anfragespezifischen Kennung zu erhalten.

13. Verfahren nach einem der Ansprüche 1 bis 12, **dadurch gekennzeichnet, dass** der Dienst (4) ein Mehrwertdienst ist.

14. Verfahren nach einem der Ansprüche 1 bis 13, **dadurch gekennzeichnet, dass** vor oder während der Übermittlung der Initiierungsanfrage von dem Kommunikationsendgerät (1) an den Diensteserver (2) eine Kommunikationsverbindung zwischen dem Kommunikationsendgerät (1) und dem Diensteserver (2) hergestellt wird und die Initiierungsanfrage über diese Kommunikationsverbindung übermittelt wird.

15. Verfahren nach einem der Ansprüche 1 bis 14, **dadurch gekennzeichnet, dass** dieses umfasst:
den Schritt der Bestimmung der Identität des Benutzers, insbesondere durch Bestimmung des Adress- Identifikators, MSISDN, des Kommunikationsendgerätes (1) in einem mobilen Netzwerk,
den Schritt der Sitzungsinitiierung, insbesondere durch Senden einer Initiierungsanfrage gemäß dem Internet Protokoll, insbesondere einer HTTPS-Anfrage, innerhalb derer die Identität des Benutzers, insbesondere mittels der MSISDN, enthalten ist, an den Diensteserver (2), Erzeugen eines anfragespezifischen Schlüssels, insbesondere einem OTP, an dem Diensteserver (2), Senden des anfragespezifischen Schlüssels an das Kommunikationsendgerätes (1), das mit dem Adress-Identifikator über das mobile Netzwerk assoziiert ist, Erzeugen einer temporären anfragespezifischen Kennung, insbesondere eines Sitzungstokens, Übermittlung des Sitzungstokens mittels eines Cookies an die Anwendung (3) auf dem Kommunikationsendgerät (1),
den Schritt des Authentifizierens, insbesondere durch Erzeugen einer Zugriffsanfrage, in der der anfragespezifische Schlüssel, insbesondere das OTP, und die anfragespezifische Kennung, insbesondere der Anfragetoken, enthalten sind, und Übermittlung der Zugriffsanfrage an den Dienst (4) auf dem Diensteserver (2), und
den Schritt des Verifizierens des anfragespezifischen Schlüssels, insbesondere OTP, und die anfragespezifische Kennung, insbesondere des Sitzungstokens, und der Verbindung des Schlüssels und der Kennung auf dem Diensteserver (2) und Bestätigens der Autorisierung des Benutzers im Falle eines positiven Verifikationsergebnisses.

16. Computer-Programm-Produkt für ein Kommunikationsendgerät (1) für den Zugriff auf zumindest einen Dienst (4) auf einem Diensteserver (2), **dadurch gekennzeichnet, dass** das Computer-Programm-Produkt Instruktionen umfasst, die, wenn das Programm durch einen Computer ausgeführt wird, den Computer dazu bringen das Verfahren nach einem der Ansprüche 1 bis 15 auszuführen.

17. System zum Authentifizieren eines Benutzers eines Kommunikationsendgerätes, wobei das System zumindest ein Kommunikationsendgerät (1) und zumindest einen Diensteserver (2) mit einem Dienst (4) aufweist, der zumindest teilweise auf dem Diensteserver (2) läuft, **dadurch gekennzeichnet, dass** zumindest eine Anwendung (3) zur Kommunikation mit dem Dienst (4) auf dem Diensteserver (2) auf dem Kommunikationsendgerät (1) vorliegt, dass die Anwendung (3) ausgelegt ist zum automatischen Erzeugen einer Initiierungsanfrage zum Initiieren einer Sitzung, die einen Adress-Identifikator des Kommunikationsendgerätes (1) umfasst, dass der Diensteserver (3) ausgelegt ist, um zumindest einen anfragespezifischen Schlüssel auf der Basis der Initiierungsanfrage zu erzeugen und um den zumindest einen anfragespezifischen Schlüssel über unterschiedliche Kommunikationsverbindungen an das Kommunikationsendgerät (1) zu übermitteln, dass das Kommunikationsendgerät (1) ausgelegt ist, um in der Sitzung automatisch eine Zugriffsanfrage, in dem der empfangene anfragespezifische Schlüssel enthalten ist, zu erzeugen und an den Diensteserver (2) zu übermitteln, und dass der Diensteserver (2) ausgelegt ist, um den anfragespezifischen Schlüssel, der in der Zugriffsanfrage enthalten ist, mit dem erzeugten anfragespezifischen Schlüssel zu vergleichen und den Benutzer im Fall eines positiven Vergleichsergebnisses zu authentifizieren.

18. System nach Anspruch 17, **dadurch gekennzeichnet, dass** es zumindest eine Kurzwahlanwendung (6) zur Kommunikation zumindest des Adress-Identifikators des Kommunikationsendgerät (1) an das Kommunikationsendgerät (1) umfasst.

19. System nach einem der Ansprüche 17 oder 18, **dadurch gekennzeichnet, dass** das System ausgelegt ist, um das Verfahren nach einem der Ansprüche 1 bis 15 auszuführen und an dem vorzugsweise eine Anwendung (3) nach einem der Ansprüche 16 oder 17 auf dem zumindest einen Kommunikationsendgerät (1) installiert ist.

## Revendications

1. Procédé d'authentification d'un utilisateur d'un terminal de communication (1), sur lequel au moins une application (3) est installée, au niveau d'un service (4) sur un serveur de services (2), **caractérisé en ce qu'**une demande de lancement, qui contient un identificateur d'adresse du terminal de communication (1), est générée par l'application (3) pour lancer une session et est transmise au serveur de services (2),
le serveur de services (2), après la réception de la demande de lancement, génère et transmet automatiquement une clé spécifique à la demande au terminal de communication (1) et
l'application (3) génère subséquemment une demande d'accès dans la session, dans lequel l'application (3) intègre la clé spécifique à la demande reçue automatiquement dans la demande d'accès, et
la demande d'accès est automatiquement transmise du terminal de communication (1) au serveur de services (2) dans la session.

2. Procédé selon la revendication 1, **caractérisé en ce que** l'application (3) effectue une interrogation d'un identificateur d'adresse du terminal de communication (1) avant de générer la demande de lancement.

3. Procédé selon la revendication 2, **caractérisé en ce que** l'interrogation de l'identificateur d'adresse est effectuée de manière interne avec le terminal de communication (1) et, seulement en cas d'un résultat d'interrogation négatif, est effectuée de manière externe au terminal de communication (1).

4. Procédé selon la revendication 3, **caractérisé en ce que** l'interrogation externe comprend l'utilisation d'un numéro court.

5. Procédé selon l'une quelconque des revendications 1 à 4, **caractérisé en ce que**, en plus de la clé spécifique à la demande, au moins un identificateur spécifique à la demande de la session est généré au niveau du serveur de services (2).

6. Procédé selon la revendication 5, **caractérisé en ce que** l'identificateur spécifique à la demande de la session est un identificateur temporaire.

7. Procédé selon l'une quelconque des revendications 5 ou 6, **caractérisé en ce que** l'identificateur spécifique à la demande est transmis du serveur de services (2) au terminal de communication (1) par le biais de la connexion de communication, par le biais de laquelle la demande de lancement a été transmise au serveur de services (2).

8. Procédé selon l'une quelconque des revendications 5 à 7, **caractérisé en ce que** l'identificateur spécifique à la demande est intégré dans la demande d'accès par l'application (3).

9. Procédé selon l'une quelconque des revendications 5 à 8, **caractérisé en ce que** la clé spécifique à la demande et l'identificateur spécifique à la demande sont transmis du serveur de services (2) au terminal de communication (1) par le biais de connexions de communication différentes.

10. Procédé selon la revendication 9, **caractérisé en ce que** la clé spécifique à la demande est transmise dans un message court, en particulier par le biais d'un réseau mobile.

11. Procédé selon l'une quelconque des revendications 9 ou 10, **caractérisé en ce que** l'identificateur spécifique à la demande est transmis au moins en partie par le biais d'un réseau commuté par paquets, en particulier Internet, de préférence dans un témoin de connexion.

12. Procédé selon l'une quelconque des revendications 1 à 11, **caractérisé en ce que** l'application (3) lit la clé spécifique à la demande à partir d'au moins un message dans le terminal de communication (1) pour obtenir l'identificateur spécifique à la demande.

13. Procédé selon l'une quelconque des revendications 1 à 12, **caractérisé en ce que** le service (4) est un service à valeur ajoutée.

14. Procédé selon l'une quelconque des revendications 1 à 13, **caractérisé en ce que**, avant ou durant la transmission de la demande de lacement du terminal de communication (1) au serveur de services (2), une connexion de communication est établie entre le terminal de communication (1) et le serveur de services (2) et la demande de lancement est transmise par le biais de cette connexion de communication.

15. Procédé selon l'une quelconque des revendications 1 à 14, **caractérisé en ce qu'**il comprend :
l'étape de détermination de l'identité de l'utilisateur, en particulier en déterminant l'identificateur d'adresse, MSISDN, du terminal de communication (1) dans un réseau mobile,
l'étape de lancement de session, en particulier par l'envoi d'une demande de lancement selon le protocole Internet, en particulier une demande HTTPS, dans laquelle l'identité de l'utilisateur, en particulier au moyen du MSISDN, est contenue, au serveur de services (2), la génération d'une clé spécifique à la demande, en particulier un OTP, au niveau du serveur de services (2), l'envoi de la clé spécifique à la demande au terminal de communication (1) qui est associé à l'identificateur d'adresse par le biais du réseau mobile, la génération d'un identificateur spécifique à la demande temporaire, en particulier un jeton de session, la transmission du jeton de session au moyen d'un témoin de connexion à l'application (3) sur le terminal de communication (1),
l'étape d'authentification, en particulier par la génération d'une demande d'accès, dans laquelle la clé spécifique à la demande, en particulier l'OTP, et l'identificateur spécifique à la demande, en particulier le jeton de session, sont contenus, et la transmission de la demande d'accès au service (4) sur le serveur de services (2), et
l'étape de vérification de la clé spécifique à la demande, en particulier l'OTP, et de l'identificateur spécifique à la demande, en particulier le jeton de session, et du lien de la clé et de l'identificateur sur le serveur de services (2) et la confirmation de l'autorisation de l'utilisateur dans le cas d'un résultat de vérification positif.

16. Produit de programme informatique pour un terminal de communication (1) pour accéder à au moins un service (4) sur un serveur de services (2), **caractérisé en ce que** le produit de programme informatique comprend des instructions qui, quand le programme est exécuté par un ordinateur, amènent l'ordinateur à exécuter le procédé selon l'une quelconque des revendications 1 à 15.

17. Système d'authentification d'un utilisateur d'un terminal de communication, dans lequel le système a au moins terminal de communication (1) et au moins un serveur de services (2) avec un service (4) qui est exécuté au moins en partie sur le serveur de services (2), **caractérisé en ce qu'**au moins une application (3) pour la communication avec le service (4) sur le serveur de services (2) est présente sur le terminal de communication (1), **en ce que** l'application (3) est conçue pour établir automatiquement une demande de lancement, pour lancer une session, qui comprend un identificateur d'adresse du terminal de communication (1), **en ce que** le serveur de services (3) est conçu pour générer au moins une clé spécifique à la demande sur la base de la demande de lancement et pour transmettre l'au moins une clé spécifique à la demande au terminal de communication (1) par le biais de connexions de communication différentes, **en ce que** le terminal de communication (1) est conçu pour générer et transmettre automatiquement au serveur de services (2), dans la session, une demande d'accès, dans laquelle la clé spécifique à la demande reçue est contenue, et **en ce que** le serveur de service (2) est conçu pour comparer la clé spécifique à la demande, qui est contenue dans la demande d'accès avec la clé spécifique à la demande générée et authentifier l'utilisateur dans le cas d'un résultat de comparaison positif.

18. Système selon la revendication 17, **caractérisé en ce qu'**il comprend au moins une application de numéro court (6) pour la communication d'au moins l'identificateur d'adresse du terminal de communication (1) au terminal de communication (1).

19. Système selon la revendication 17 ou 18, **caractérisé en ce que** le système est conçu pour réaliser le procédé selon l'une quelconque des revendications 1 à 15 et de préférence au niveau duquel une application (3) selon l'une quelconque des revendications 16 ou 17 est installée sur au moins un terminal de communication (1).
